# EUROPEAN PATENT SPECIFICATION

(11) **EP 3 022 423 B1**
(45) Date of publication and mention of the grant of the patent: **30.01.2019**
(21) Application number: 14735529.1
(22) Date of filing: 27.06.2014
(51) Int. Cl.: F02C 7/228, F02C 9/28, F02C 9/48

(54) **TURBINE ENGINE CONTROL SYSTEM**
TURBINENTRIEBWERKSTEUERUNGSSYSTEM
SYSTÈME DE COMMANDE DE MOTEUR À TURBINE

(30) Priority: 19.07.2013 GB 201312974
(43) Date of publication of application: 25.05.2016
(73) Proprietor: Siemens Aktiengesellschaft, 80333 München (DE)
(72) Inventor: DOLMANSLEY, Timothy, Shireoaks Worksop S81 8NA (GB); HEADLAND, Paul, Lincoln LN1 1NA (GB); SKIPPER, Dorian, Lincoln LN6 3NJ (GB); SMITH, Michael, North Hykeham Lincoln LN6 9TL (GB)
(74) Representative: Maier, Daniel Oliver
(86) International application number: PCT/EP2014/063670
(87) International publication number: WO 2015/007501

(56) References cited:
- EP-A2- 2 306 090
- WO-A1-92/07221
- US-A1- 2007 271 024

## Description

### FIELD OF INVENTION

The present invention relates to a turbine engine control system for controlling the power output dependent on fuel pressure and ambient temperature for any given capacity of a liquid fuel burner.

### BACKGROUND OF INVENTION

Dual-fuel industrial gas turbine engines are capable of operating their burner systems with liquid or gas fuels. Some conventional turbine engines operate on liquid fuel for short periods during commissioning and can also be expected to run at low power when an associated gas plant is not operational, for example down for maintenance. This tends to be for a period of several weeks. In one example of the applicant's products, the SGT400, liquid fuel geometry of the burner is optimised for high load operation, for example 13MW demand. At low loads, for example 2MW demand, gas fuel is normally used. When gas fuel is not available liquid fuel can be used. However, at these relatively low loads the burner geometry is not optimised and along with relatively low fuel pressures poor atomisation of the liquid spray occurs in the combustor unit. Poor atomisation of the liquid results in unburned fuel which can be deposited on components in the combustion unit. In particular, these carbon deposits can build up on burner components and reduce ignition performance. This can in extreme cases result in hardware damage or poor running of the engine.

It is currently accepted practice that running at low loads on liquid fuel will cause excessive carbon deposits to build up on the combustion system components and that at regular intervals removal of the hardware to clean and overhaul is necessary.

WO92/07221 A1 discloses a gas turbine engine combustion chamber which has staged combustion to reduce nitrous oxides comprises a first radial flow swirler and a second radial flow swirler which supply primary air into a first fuel and air mixing zone. A pilot injector only supplies fuel to be burnt into the mixing zone at low power levels. At high power levels primary fuel injectors inject fuel into the passages formed between the vanes of the first and second swirlers so that fuel and air mixture flows into the first fuel and air mixing zone to be burnt. Simultaneously secondary fuel injectors inject fuel into an annular secondary fuel and air mixing zone which surrounds the first mixing zone. Fuel and air from the second mixing zone flow through apertures into the combustion chamber downstream of the first mixing zone and the additional fuel is burnt in the zone.

### SUMMARY OF INVENTION

It is an objective of the present invention to reduce or eliminate carbon deposits in the combustion system. It is another object of the present invention to reduce or eliminate the requirement to strip, clean and overhaul burners and other combustion system components, particularly, after only a short period of liquid fuel operation at relatively low loads. It is another object of the present invention to provide an improved changeover between gas and liquid fuel supplies. It is yet another object of the present invention to reduce emissions from a turbine engine. These objectives may be solved by a method of operating a turbine engine in accordance with the claims.

According to an aspect of the present invention there is provided a method of operating a turbine engine. The turbine engine comprises an inlet, a turbine, a control system, a liquid fuel supply system and a modular liquid fuel burner system. The modular liquid fuel burner system has at least two interchangeable liquid burners and a liquid-fuel manifold. The control system controls a fuel supply via the liquid-fuel manifold to the burners dependent on demanded output power. The at least two interchangeable liquid fuel burners have different operating power output ranges and having at least a high power output liquid fuel burner and a low power output liquid fuel burner. The modular liquid fuel burner system may have an interchangeable main liquid burner and/or an interchangeable pilot liquid burner. That is to say each of the main and/or pilot burners are interchangeable with respective different capacity burners. Either the main or the pilot or both liquid burners may be changed for different capacity burners of the same type. The term 'interchangeable' is intended to mean that one liquid fuel burner can be replaced by another liquid fuel burner of a different operating power output range. Thus a main liquid fuel burner may be swapped for another main liquid fuel burner and a pilot liquid fuel burner may be swapped for another pilot liquid fuel burner. The term 'modular' is intended to mean that one liquid fuel burner can be removed and replaced by another liquid fuel burner, the main and/or pilot, without the necessity to alter any other physical aspect of the combustor.

The method of operating the turbine engine comprises the steps of controlling a liquid fuel supply to the high power output burner for a high power output having a turbine entry temperature limit, controlling a liquid fuel supply to the low power output burner for a low power output having a liquid fuel manifold pressure limit. The method of operating the turbine engine comprises the steps of controlling a liquid fuel supply to the high power output burner for a high power output based on a turbine entry temperature limit and controlling a liquid fuel supply to the low power output burner for a low power output based on a liquid fuel manifold pressure limit. Advantageously, across the turbine engine's operating range a satisfactory atomization of the liquid fuel is achieved and/or mixing and/or positioning of atomised liquid fuel and air is adequate to prevent significant carbon being deposited in the combustion unit.

For a high power output burner, the main and/or pilot, its output can be controlled or limited by the controller to or within the turbine entry temperature limit when that limit is reached and in order not to exceed the turbine entry temperature limit or to limit or set the duration of operation at an output above the turbine entry temperature limit. Thus when or even before the turbine entry temperature limit is reached the controller controls the amount of liquid fuel supply to a level such that the turbine entry temperature limit is not surpassed or is only surpassed for a limited or predetermined duration.

The method may comprise the step of changing between the high power output liquid fuel burner and the low power output burner to achieve a predetermined power output range.

The method may comprises the step of inputting there has been a change between the high power output liquid fuel burner and the low power output burner to the control system. In this step an operator may input to the control system the specific capacity of the burner and/or the type of burner, for example the main or the pilot or both.

The method step of changing between the high power output liquid fuel burner and the low power output burner may comprises the step of modifying the turbine entry temperature limit as a function of manifold pressure giving a depressed turbine entry temperature limit for limiting the maximum allowable output. The control system includes a routine that artificially depresses or modifies the turbine entry temperature limit in order to prevent exceeding the fuel manifold pressure limit. This allows the engine to achieve the maximum possible power output because the maximum power available for a given fuel pressure is a function of inlet air temperature.

For a low power output burner, the main and/or pilot, its output can be controlled or limited by the controller to or within the fuel manifold pressure limit when that limit is reached and in order not to exceed the fuel manifold pressure limit or to limit or set the duration of operation at an output beyond the fuel manifold pressure limit. Thus when or even before the fuel manifold pressure limit is reached the controller controls the amount of liquid fuel supply to a level such that the fuel manifold pressure limit is not exceeded or is only exceeded for a limited or predetermined duration.

The method may comprise the step of reducing the modified turbine entry temperature limit when the liquid fuel manifold pressure is high. For any gas turbine engine the liquid fuel manifold pressure will have a maximum design limit for the pressure in its liquid fuel manifold and this nominal maximum design limit may be a predetermined limit for when the modified turbine entry temperature limit is reduced. The predetermined limit can be set or reset at a level above or below the nominal maximum design limit.

The method may comprise the step of increasing the modified TET limit when the liquid fuel manifold pressure is low. If the liquid fuel manifold pressure is low or below a predetermined limit then the modified TET limit is increased which in turn commands the fuel pump to increase fuel pressure.

The method may comprise the step of controlling the fuel supply to any one or more of the burners dependent on whether the turbine entry temperature is exceeded or the fuel manifold pressure limit is reached. The controller may modify the flow of liquid fuel to the burner to reduce the turbine entry temperature and/or the fuel manifold pressure.

Where the turbine engine is connected to a mechanical drive or an electrical generator connected to an electrical distribution grid, the method of operating the gas turbine may comprise the steps of the control system issuing any one or more of the warnings, the turbine engine is approaching the turbine entry temperature limit where no further load can be demanded, and the turbine engine is running on the turbine entry temperature limit.

Where the turbine engine is operating in an island mode, the method comprising the steps of the control system issuing any one or more of the warnings, the turbine engine is approaching the turbine entry temperature limit where no further load can be demanded load, the turbine engine has exceeded turbine entry temperature limit and demanded power must be reduced and the turbine engine is running on the turbine entry temperature limit. This will allow an operator of the turbine engine to reduce the load demanded from the site. Advantageously, the in-service life of the pump is not be adversely effected by a short periods of time at higher than nominal maximum pump pressures.

The method may comprise the steps of controlling the liquid fuel supply to the burner based on the turbine entry temperature limit at high inlet temperatures, and controlling the liquid fuel supply to the burner based on the shaft speed limit at low inlet temperatures.

The at least two interchangeable liquid fuel burners may have operating power output ranges that overlap.

The at least two interchangeable liquid fuel burners may be main liquid burners. The at least two interchangeable liquid fuel burners may be pilot liquid burners. In addition, the at least two interchangeable liquid fuel burners may be both the main and pilot liquid burners.

Any one or more of the main liquid burners may have a power output within any one of the ranges 10% to 25%, 20% to 80% and 70% to 100%.

Any two of the burners may have a power output within the ranges 10% to 25%, 20% to 80% and 70% to 100%.

Any two of the burners may have a power output within the ranges 10% to 25% and 75% to 100%.

### BRIEF DESCRIPTION OF THE DRAWINGS

The above mentioned attributes and other features and advantages of this invention and the manner of attaining them will become more apparent and the invention itself will be better understood by reference to the following description of embodiments of the invention taken in conjunction with the accompanying drawings, wherein
FIG. 1 shows part of a turbine engine in a sectional view and in which the present invention is incorporated,
FIG. 2 show an enlarged view of part of the combustor section of the turbine engine and in which the present invention is relates,
FIG. 3 is a representation of an operational window for the turbine engine power output against ambient temperature,
FIG. 4 is a logic flow-diagram of engine power output control based on a main fuel manifold pressure and a turbine entry temperature limit and
FIG. 5 is a logic flow-diagram for a control system for how the modified TET limit is applied along with appropriate messaging.

### DETAILED DESCRIPTION OF INVENTION

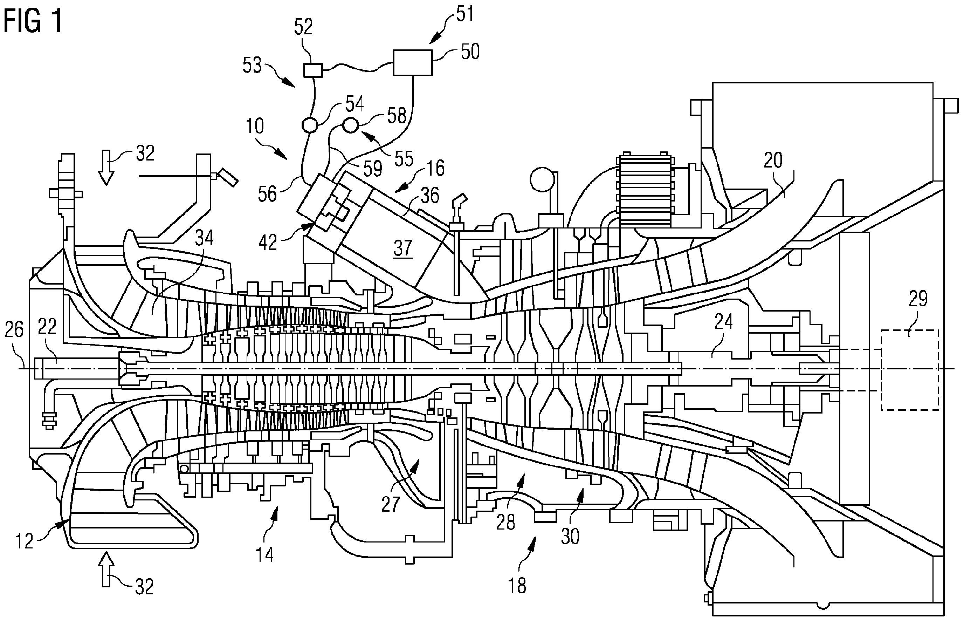

**Figure 1** is a schematic illustration of a general arrangement of a turbine engine 10 having an inlet 12, a compressor 14, a combustor system 16, a turbine system 18, an exhaust duct 20 and a twin-shaft arrangement 22, 24. The turbine engine 10 is generally arranged about an axis 26 which for rotating components is their rotational axis. The arrangements 22, 24 may have the same or opposite directions of rotation. The combustion system 16 comprises an annular array of combustor units 36, only one of which is shown. In one example, there are six combustor units evenly spaced about the engine. The turbine system 18 includes a high-pressure turbine 28 drivingly connected to the compressor 14 by a first shaft 22 of the twin-shaft arrangement. The turbine system 18 also includes a low-pressure turbine 30 drivingly connected to a load 29 via a second shaft 24 of the twin-shaft arrangement.

The terms radial, circumferential and axial are with respect to the axis 26. The terms upstream and downstream are with respect to the general direction of gas flow through the engine and as seen in Figure 1 is generally from left to right.

The compressor 14 comprises an axial series of stator vanes and rotor blades mounted in a conventional manner. The stator or compressor vanes may be fixed or have variable geometry to improve the airflow onto the downstream rotor or compressor blades. Each turbine 28, 30 comprises an axial series of stator vanes and rotor blades mounted via discs arranged and operating in a conventional manner.

In operation air 32 is drawn into the engine 10 through the inlet 12 and into the compressor 14 where the successive stages of vanes and blades compress the air before delivering the compressed air into the combustion system 16. In a combustion chamber 37 of the combustion system 16 the mixture of compressed air and fuel is ignited. The resultant hot working gas flow is directed into, expands and drives the high-pressure turbine 28 which in turn drives the compressor 14 via the first shaft 22. After passing through the high-pressure turbine 28, the hot working gas flow is directed into the low-pressure turbine 30 which drives the load 29 via the second shaft 24.

The low-pressure turbine 30 can also be referred to as a power turbine and the second shaft 24 can also be referred to as a power shaft. The load 29 is typically an electrical machine for generating electricity or a mechanical machine such as a pump or a process compressor. Other known loads may be driven via the low-pressure turbine. The fuel may be in gaseous or liquid form.

The turbine engine 10 shown and described with reference to figure 1 is just one example of a number of turbine engines in which this invention can be incorporated. Such engines include single, double and triple shaft engines applied in marine, industrial and aerospace sectors.

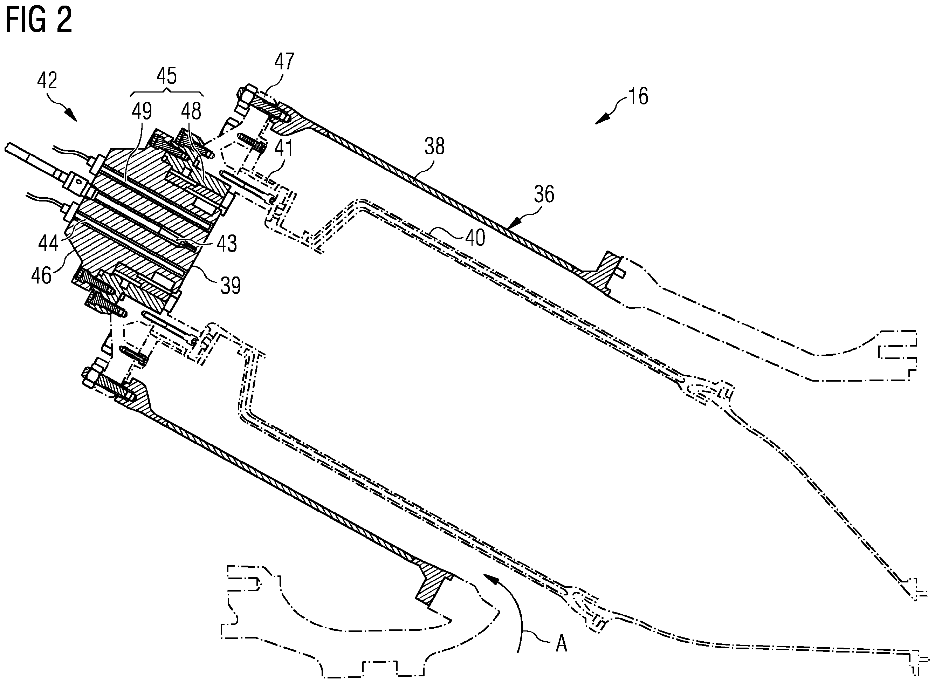

**Figure 2** shows an enlarged view of part of the combustor section 16 which is a Dry Low Emissions combustion system and is designed to minimise the emissions to atmosphere of nitrogen oxides, carbon monoxide and unburned hydrocarbons. Only one of the annular array of combustor units 36 is shown. The combustor unit 36 comprises an outer housing 38 surrounding a combustion chamber 40 within which is held a flame. The combustor unit 36 further comprises a burner 42 of conventional construction. For example, a typical burner arrangement is described with reference to GB2453114B to the present applicant and the description of which is incorporated herein.

The burner 42 comprises a pilot gas burner 46, a main gas burner 47, a pilot liquid burner 49, a main liquid burner 48 and a swirler 41. In this embodiment the pilot liquid burner 49 is in the form of a lance. The term modular liquid fuel burner system 45 is used to describe the pilot and main liquid burners 48, 49.

The compressed air (arrow A) from the compressor passes between the outer housing 38 and the combustion chamber 40 and enters the swirler 41 where the fuel is mixed therewith. The burner 42 may be referred to as a dual-fuel burner because it is configured to be supplied with and inject both gaseous and liquid fuels into the combustion chamber 37. The gaseous and liquid fuels are supplied via pipe work and manifolds as described below. As can be seen in GB2453114B, the burner 42 defines liquid fuel spray orifices or ports (10) and gas fuel orifices or ports (18) for the pilot flame, which are duplicated in the main burner. The compressed air is forced to swirl and is turbulent which helps to atomise and mix the fuel. In the case of liquid fuel the atomised liquid fuel spray is further vaporised by the turbulence. An igniter 43 produces sparking to ignite the fuel/air mixture. A thermocouple 43 measures the temperature at a burner face 39.

The presently described dual fuel system is modular, that is to say the burner 42 or parts of the burner 42 are interchangeable. The pilot and main gas burners 46, 47 are capable for use between 0% to 100% load capacity. Each main liquid burner unit 48 is designed to operate over a particular load range and preferably the range of each liquid burner overlaps at least one other burner's range. In this exemplary embodiment, three main liquid burners 48 are interchangeable with one another and are designed with operational ranges 10% to 25%, 20% to 80% and 70% to 100% respectively. The three main liquid burners 48 each have differing sized liquid fuel spray orifices or ports and which are sized according to the operational power output range and in general the orifices increase in size, or liquid fuel flow area, with increasing operational load range. The pilot liquid lance 49 is also independently interchangeable and the fuel flow capacity of the pilot liquid lance or burner can be designed to complement the main liquid burner 48.

The power output ranges for the main liquid burners 48 are between (and including) 10% to 25%, 20% to 80% and 70% to 100% and may be described as low, medium and high power output ranges respectively. However, it should be appreciated that these power output ranges can vary markedly dependent on turbine engine performance, site application requirements, load type and environmental considerations. The power output ranges are not required to overlap, for example the ranges may be 10% to 25%, 25% to 75% and 75% to 100%. In another example of a site's requirement, the power output ranges for the main liquid burners 48 are between (and including) 10% to 25% and 75% to 100%.

Referring back to Figure 1, each burner module 42 is controlled by control system module 50, which is part of an engine control system 51. The control system module 50 has settings tailored to suit each particular burner module 42. Each burner 42 is supplied liquid fuel via a liquid fuel supply system 53 including a pump 52, a fuel manifold 54 and individual supply pipes 56 leading to the burner 42. Gaseous fuel is supplied to the burner 42 via a gaseous fuel supply system 55 including a pressurised source, controllable valves (not shown), a gas manifold 58 and individual gas supply pipes 59 also connecting to the burner 42.

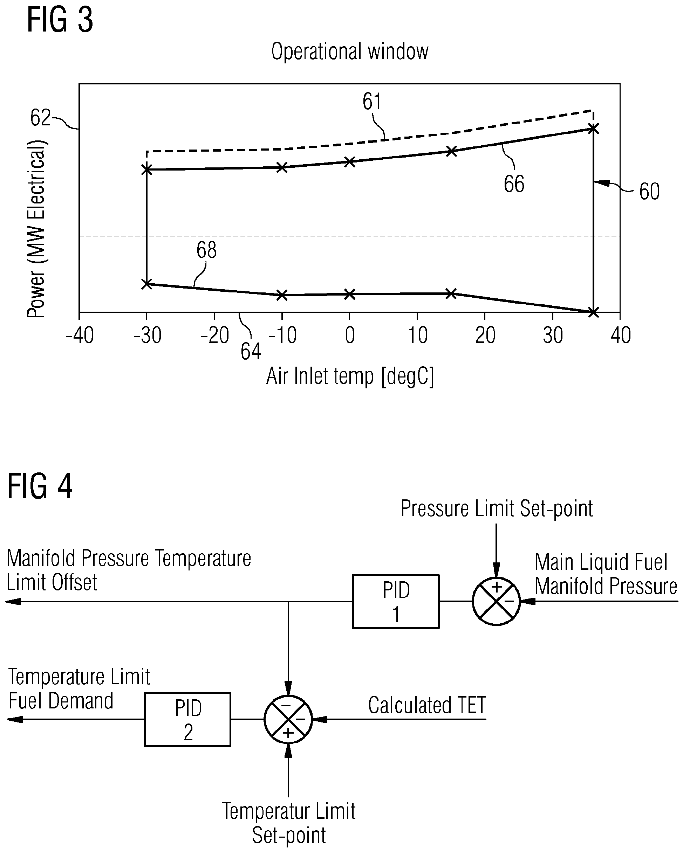

Referring to **Figure 3**, the turbine engine has an operational window 60 represented by power output in megawatts along the y-axis 62 and inlet (12) air temperature in degrees Celsius on the x-axis 64. In the present exemplary embodiment, the inlet air temperature is the ambient temperature; however, heating and or cooling devices can be used to modulate the ambient air temperature to a desirable inlet air temperature.

The operational window 60 power output limits are dependent on the inlet gas temperature and include an upper limit 66 and a lower limit 68. The upper limit 66 of power output is limited by the fuel pressure in the fuel manifold 54 and is achieved by control of the fuel pump 52. A safe working pressure limit, higher than the upper limit, is also applied to protect the liquid fuel supply system 51 from over-pressure and potential failure. The lower limit 68 is the limit below which excessive or unacceptable carbon deposits can build up within the combustor unit 36. The lower limit 68 can correspond to the lowest liquid fuel pressure where satisfactory atomization of the liquid fuel is achieved and/or mixing and/or positioning of the atomised fuel and air is adequate to prevent significant carbon being deposited in the combustion unit. The lower limit 68 can be based on any one or more of the factors fuel/air momentum ratio, penetration of the fuel into the air flow or fuel droplet size (e.g. Sauter mean diameter). The lower limit 68 could also be found empirically.

The upper operational window 60 may be extended to a higher limit 61 by increasing the liquid fuel flow through the liquid pilot burner 44. It is possible to increase up to 100% pilot fuel flow but there would be other implications on the operation of the engine such as increased emissions and increased temperatures within the combustion chamber 40. Instead, it is preferable to optimise the pilot fuel flow for the load range being used to limit emissions and temperatures. A typical example of this would be to increase the liquid pilot fuel flow by 20%. At approximately 3MW this would a 15% increase in the achievable power as indicated by the line 61 in Fig.2.

The control system module 50 includes software having a sub-routine that commands the maximum achievable fuel flow for the upper limit 66 of the operational window and therefore the fuel pressure for any given liquid burner capacity. Further to this the control system module 50 includes a sub-routine with operational limits to prevent damage or reduced life of the pump 52. The life of the pump 52 is reduced the closer it operates to its maximum operating supply pressure. It is desirable for the pump 52 to be capable of operating for short period up to its maximum capacity to allow operators time to reduce a demanded power output to a safer and lower operational limit. In situations where the control system module 50 does not base operation on control of the fuel pressure, the operation is limited on a parameter such as output power. However, as can be seen in Fig. 3 the maximum operation limit of the engine across the power output range would be significantly reduced at higher ambient conditions if the operation is limited on a factor such as output power.

Parameters other than the power output can be used to limit operation. For example in the event of a damaged or worn component of the engine, safe operation can continue until scheduled maintenance, site power demand allows, capacity of the electrical system after the generator or availability of a replacement component. In this event, other parameters include compressor discharge pressure, exhaust temperature or gas fuel supply pressure.

Conventional engine operation control is limited by either the Turbine Entry Temperature (TET) or a gas generator speed to prevent excessive temperature or stress on the turbine components. In the event of either of these limits being exceeded the engine control system reduces the fuel input in order to restore operation below these limits.

For the burners 42 designed with lower and medium operational ranges 10% to 25% and 20% to 80% the liquid manifold pressure will reach the maximum available fuel pressure from the pump 52 (also reducing pump lifetimes) before the engine reaches the TET or the gas generator speed limits. The control system's TET limit is set for normal full load running and has different settings for gas and liquid fuel operation. The control system includes a routine that artificially depresses or modifies the TET limit in order to prevent exceeding the fuel manifold pressure limit. This allows the engine to achieve the maximum possible power output because the maximum power available for a given fuel pressure is a function of inlet temperature. This depressed TET limit can also be referred to as a modified TET limit.

The control system module 50 reduces the modified TET limit when the liquid fuel manifold pressure is high and will then modulate the modified TET limit in order to limit the fuel manifold pressure. It then increases the modified TET limit when the liquid fuel manifold pressure is below the limit due to the power output demand being below maximum available. This allows the maximum power output to be achieved for any given inlet gas temperature, rather than having a single and finite power output limit. This is also advantageous where the turbine engine powers a mechanical drive rather than an electrical generator.

In a situation where the turbine engine drives a mechanical drive (29) or where it is connected to an electrical grid (29), the TET settings or the gas generator speed settings have different values compared to its operation in an island mode as described above. In island mode the turbine engine 10 produces all the power for a given site and therefore has no control over the load demanded. In both cases there will be a safe operating level which is designed to prevent the fuel pump 52 exceeding a pressure limit which will adversely affect its life and an ultimate pressure limit which is where the flow begins to delaminate within the fuel pump 52. Flow delamination of fuel flow in the fuel pump is particularly detrimental to the longevity of the fuel pump and therefore supply of fuel to the turbine engine. Failure of the fuel pump will cause the turbine engine to cease operation and hence stop power generation.

For a mechanical drive or an electrical generator connected to a electrical distribution grid connected to the turbine engine, the turbine engine is capable of operating all the way up to the modified TET limit and which modifies the power output to match this modified TET limit. Here the control system will issue two messages for the condition of the engine;
1) engine approaching the TET limit for the engine (this warns the operator that they cannot allow more load from the site), and
2) engine running on TET limit (based on fuel pressure).

When running in island mode, where the demanded output power cannot be controlled, three messages are issued by the control system for the condition of the engine;
1) engine approaching TET limit (this warns the operator that they cannot allow more load from the site),
2) engine has exceeded TET limit and demanded power must be reduced (this is when the safe level of operation, to maintain pump life, has been exceeded slightly but has not reached the maximum available pressure) and
3) engine running on TET limit.

In island mode condition 2) is designed to allow a short time of running above the limit, typically this short time might be up to one hour and preferably up to 10 minutes. The time above the limit will be based on an inverse time algorithm where the higher above the limit the less time is permitted above the limit i.e. less time is available to reduce the demanded load. This will allow an operator of the turbine engine to reduce the load demanded from the site. The in service life of the pump should not be adversely effected by some short periods of time at higher pressures; thereby preventing a limit of the available power to a site automatically which is not desirable. However, after the given short time period has expired or the maximum pressure limit is exceeded, then the turbine engine output will start controlling power output based on the TET limit and will therefore limit the available power. This will cause the shaft speed to decrease and a power management system should then detect the turbine engine output being controlled (based on the TET limit) and start to reduce the load demanded.

The control system 52 is capable of overcoming the problem of changing fuel type between gas and liquid. For turbine engines used in island mode, for mechanical load drive and grid output, when running on gas fuel and a request to switch to liquid fuel (e.g. diesel) is received initially there is no liquid fuel flow so the control system will not be able to set the TET limit in response to the liquid fuel pressure. Typically the operating power on gas fuel before changing to liquid fuel may be higher than the capability of the lower operating range liquid burner so the load must be reduced before attempting to change the fuel. Thus the switch over to liquid fuel is prevented by the control system 51 software if it predicts that the maximum fuel pressure for this power will be above the pressure limit of the liquid fuel until the load has been reduced to below the predicted level. The control software calculates this level from knowledge of the liquid burner characteristics ('Flow Number'), the pressure limit of the fuel pump, and pre-defined characteristics of the engine as follows:
The nominal Flow Number of the burner may be defined by the operator on installation of the burners, or may be estimated from initial operation of the engine on liquid fuel by relating the fuel flow to the burner pressure.

From the Flow Number and the fuel pressure limit the maximum flow of fuel is calculated. This is converted to a maximum energy value (kW) available from the fuel.

This energy value is used to calculate the available output power from the engine for this energy value from the fuel. This power, calculated from the engine characteristics, represents the maximum possible engine power on liquid fuel with the burners.

The output power of the engine must be reduced to this level or below (to provide margin for uncertainty) before commencing the change from gas to liquid fuel.

Fig. 4 when the main liquid fuel manifold pressure initially exceeds the set-point PID1 (Proportional + Integral + Derivative controller) is initialized to the difference between the calculated TET and temperature limit set-point so that the TET limit controller will take control. PID1 will then modulate the offset applied to the TET PID controller (PID2) so that TET controller will limit the fuel demand until the load demand results in a fuel pressure below the maximum limit.

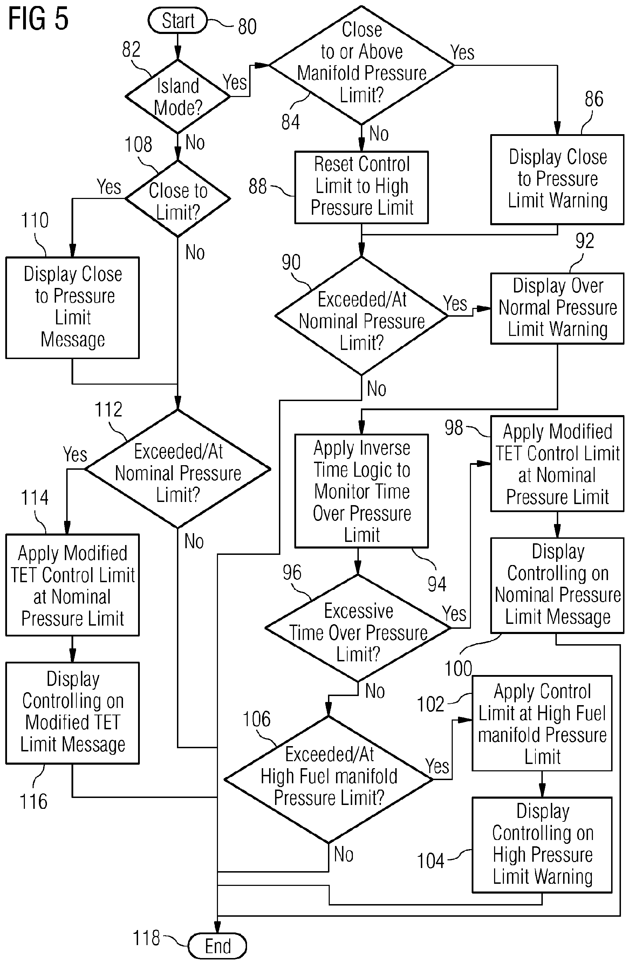

FIG. 5 is a logic flow-diagram for the control system for how the modified TET limit is applied along with appropriate messaging. It should be understood that this part of the control system does not require knowing the capacity of the particular liquid fuel burner. This logic is continually operational whilst running on liquid fuel.

The control system logic 80 requires an input to determine whether the turbine engine is operating in an island mode (or mechanical drive or grid mode). If the island mode is selected (YES) then as demand increases (causing fuel manifold pressure to rise) a warning 86 will be displayed indicating the manifold pressure is close to its limit. Here the operator can reduce demand from the site. If the demand increases above or to the nominal pressure limit 90 (YES) then a warning 92 will be displayed. To protect the pump 52 from significant damage the inverse time over pressure limit is applied related to the power output level above nominal or design maximum and a time limit for over-load is calculated 94. If there is excessive time over-pressure limit 96 (YES) then the control system applies a modified TET control limit at the nominal Pressure limit 98 and displays that the power output of the turbine engine is being limited 100. Alternatively, if there is no excessive time over-Pressure limit 96 (NO) then the control system monitors whether the maximum fuel manifold pressure is exceeded or is at its high pressure limit 106.

If the fuel manifold pressure is exceeded or is at its high pressure limit 106 (YES) then a modified TET control limit is applied at the high fuel manifold pressure limit and a warning is displayed 104 such that the engine power output is being limited to high fuel manifold pressure limit. Then the control system run will end 118.

Where the turbine engine is not in the island mode 82 (NO), e.g. the engine is driving a mechanical system or is connected to an electrical grid, the control system monitors the pressure and if it is close to the pressure limit (YES) then a warning is displayed 110. The control system monitors whether the pressure is at or has exceeded the limit 112. Then the control system run will end 118. However, if the pressure is at or has exceeded the limit (YES) then the control system applies a modified TET control limit at the nominal pressure limit 114 and displays the turbine engine power output is being controlled and limited 116. Then the control system run will end 118.

## Claims

1. A method of operating a turbine engine (10), the turbine engine (10) comprising an inlet (12), a turbine (28, 30), a control system (51), a liquid fuel supply system (53) and a modular liquid fuel burner system (45) having at least two interchangeable liquid burners (48, 49) and a liquid-fuel manifold (54),
the control system (51) controls a fuel supply via the liquid-fuel manifold (54) to the burners (48, 49) dependent on demanded output power,
the at least two interchangeable liquid fuel burners (48, 49) have different operating power output ranges and having at least a high power output liquid fuel burner and a low power output liquid fuel burner,
**characterised in that** the method of operating the turbine engine (10) comprises the steps of
controlling a liquid fuel supply to the high power output burner (48, 49) for a high power output based on a turbine entry temperature limit,
controlling a liquid fuel supply to the low power output burner (48, 49) for a low power output based on a liquid fuel manifold pressure limit.

2. A method of operating a turbine engine (10) as claimed in claim 1, wherein the method comprises the step of
changing between the high power output liquid fuel burner (48, 49) and the low power output burner (48, 49) to achieve a predetermined power output range.

3. A method of operating a turbine engine (10) as claimed in claim 2, wherein the method comprises the step of
inputting there has been a change between the high power output liquid fuel burner (48, 49) and the low power output burner (48, 49) to the control system (51).

4. A method of operating a turbine engine (10) as claimed in any one of claims 2-3, wherein the method step of changing between the high power output liquid fuel burner (48, 49) and the low power output burner (48, 49), comprises the step of modifying the turbine entry temperature limit as a function of manifold pressure giving a depressed limit for maximum allowable output.

5. A method of operating a turbine engine (10) as claimed in claim 4, wherein method comprises the step of
reducing the modified TET limit when the liquid fuel manifold pressure is high.

6. A method of operating a turbine engine (10) as claimed in any one of claims 4-5, wherein method comprises the step of
increasing the modified TET limit when the liquid fuel manifold pressure is low

7. A method of operating a turbine engine (10) as claimed in any one of claims 1-6, wherein the turbine engine is connected to a mechanical drive or an electrical generator connected to an electrical distribution grid,
the method comprising the steps of the control system (51) issuing any one or more of the warnings,
the turbine engine is approaching the turbine entry temperature limit where no further load can be demanded load, and
the turbine engine is running on the turbine entry temperature limit.

8. A method of operating a turbine engine (10) as claimed in any one of claims 1-6, wherein the turbine engine is operating in an island mode,
the method comprising the steps of the control system (51) issuing any one or more of the warnings,
the turbine engine is approaching the turbine entry temperature limit where no further load can be demanded,
the turbine engine has exceeded turbine entry temperature limit and demanded power must be reduced and
the turbine engine is running on the turbine entry temperature limit.

9. A method of operating a turbine engine (10) as claimed in any one of claims 1-8, wherein the method comprises the steps of
controlling the liquid fuel supply to the burner based on the turbine entry temperature limit at high inlet temperatures, and
controlling the liquid fuel supply to the burner based on the shaft speed limit at low inlet temperatures.

10. A method of operating a turbine engine (10) as claimed in any one of claims 1-9, wherein the at least two interchangeable liquid fuel burners (48, 49) have operating power output ranges that overlap.

11. A method of operating a turbine engine (10) as claimed in any one of claims 1-10, wherein the at least two interchangeable liquid fuel burners (48, 49) are main liquid burners (48).

12. A method of operating a turbine engine (10) as claimed in any one of claims 1-11, wherein the at least two interchangeable liquid fuel burners (48, 49) are pilot liquid burners (49).

13. A method of operating a turbine engine (10) as claimed in claim 11, wherein any one of the main liquid burners (48) has a power output within any one of the ranges 10% to 25%, 20% to 80% and 70% to 100%.

14. A method of operating a turbine engine (10) as claimed in any one of claims 2-5, wherein any two of the burners (48, 49) has a power output within the ranges 10% to 25%, 20% to 80% and 70% to 100%.

15. A method of operating a turbine engine (10) as claimed in any one of claims 2-5, wherein any two of the burners (48, 49) has a power output within the ranges 10% to 25% and 75% to 100%.

## Patentansprüche

1. Verfahren zum Betreiben eines Turbinenmotors (10), wobei der Turbinenmotor (10) einen Einlass (12), eine Turbine (28, 30), ein Steuerungssystem (51), ein Flüssigbrennstoff-Zuführungssystem (53) und ein modulares Flüssigbrennstoff-Brennersystem (45) mit wenigstens zwei austauschbaren Flüssigbrennstoffbrennern (48, 49) und einem Flüssigbrennstoffverteiler (54) umfasst,
wobei das Steuerungssystem (51) eine Brennstoffzufuhr über den Flüssigbrennstoffverteiler (54) zu den Brennern (48, 49) in Abhängigkeit von der geforderten Ausgangsleistung steuert,
wobei die wenigstens zwei austauschbaren Flüssigbrennstoffbrenner (48, 49) unterschiedliche Bereiche der Betriebsleistungsabgabe aufweisen und wenigstens einen Flüssigbrennstoffbrenner für hohe Leistungsabgabe und einen Flüssigbrennstoffbrenner für niedrige Leistungsabgabe umfassen,
**dadurch gekennzeichnet, dass** das Verfahren zum Betreiben des Turbinenmotors (10) die Schritte umfasst:
Steuern einer Flüssigbrennstoffzufuhr zu dem Brenner für hohe Leistungsabgabe (48, 49), für eine hohe Leistungsabgabe basierend auf einem Grenzwert der Turbineneintrittstemperatur,
Steuern einer Flüssigbrennstoffzufuhr zu dem Brenner für niedrige Leistungsabgabe (48, 49), für eine niedrige Leistungsabgabe basierend auf einem Grenzwert des Drucks des Flüssigbrennstoffverteilers.

2. Verfahren zum Betreiben eines Turbinenmotors (10) nach Anspruch 1, wobei das Verfahren den Schritt umfasst:
Wechseln zwischen dem Flüssigbrennstoffbrenner für hohe Leistungsabgabe (48, 49) und dem Brenner für niedrige Leistungsabgabe (48, 49), um einen vorbestimmten Leistungsabgabebereich zu erreichen.

3. Verfahren zum Betreiben eines Turbinenmotors (10) nach Anspruch 2, wobei das Verfahren den Schritt umfasst:
Eingeben in das Steuerungssystem (51), dass ein Wechsel zwischen dem Flüssigbrennstoffbrenner für hohe Leistungsabgabe (48, 49) und dem Brenner für niedrige Leistungsabgabe (48, 49) stattgefunden hat.

4. Verfahren zum Betreiben eines Turbinenmotors (10) nach einem der Ansprüche 2 bis 3, wobei der Verfahrensschritt des Wechselns zwischen dem Flüssigbrennstoffbrenner für hohe Leistungsabgabe (48, 49) und dem Brenner für niedrige Leistungsabgabe (48, 49) den Schritt umfasst:
Modifizieren des Grenzwertes der Turbineneintrittstemperatur in Abhängigkeit vom Verteilerdruck, was einen erniedrigten Grenzwert für die maximal zulässige Abgabe ergibt.

5. Verfahren zum Betreiben eines Turbinenmotors (10) nach Anspruch 4, wobei das Verfahren den Schritt umfasst:
Verringern des modifizierten Grenzwertes der TET, wenn der Druck des Flüssigbrennstoffverteilers hoch ist.

6. Verfahren zum Betreiben eines Turbinenmotors (10) nach einem der Ansprüche 4 bis 5, wobei das Verfahren den Schritt umfasst:
Erhöhen des modifizierten Grenzwertes der TET, wenn der Druck des Flüssigbrennstoffverteilers niedrig ist.

7. Verfahren zum Betreiben eines Turbinenmotors (10) nach einem der Ansprüche 1 bis 6, wobei der Turbinenmotor mit einem mechanischen Antrieb oder einem mit einem elektrischen Verteilnetz verbundenen Stromgenerator verbunden ist,
wobei das Verfahren die Schritte des Ausgebens, durch das Steuerungssystem (51), einer oder mehrerer der folgenden Warnungen umfasst:
der Turbinenmotor nähert sich dem Grenzwert der Turbineneintrittstemperatur, wo keine weitere Last angefordert werden kann, und
der Turbinenmotor arbeitet am Grenzwert der Turbineneintrittstemperatur.

8. Verfahren zum Betreiben eines Turbinenmotors (10) nach einem der Ansprüche 1 bis 6, wobei der Turbinenmotor im Inselbetrieb arbeitet,
wobei das Verfahren die Schritte des Ausgebens, durch das Steuerungssystem (51), einer oder mehrerer der folgenden Warnungen umfasst:
der Turbinenmotor nähert sich dem Grenzwert der Turbineneintrittstemperatur, wo keine weitere Last angefordert werden kann,
der Turbinenmotor hat den Grenzwert der Turbineneintrittstemperatur überschritten, und die geforderte Leistung muss verringert werden, und
der Turbinenmotor arbeitet am Grenzwert der Turbineneintrittstemperatur.

9. Verfahren zum Betreiben eines Turbinenmotors (10) nach einem der Ansprüche 1 bis 8, wobei das Verfahren die Schritte umfasst:
Steuern der Flüssigbrennstoffzufuhr zu dem Brenner basierend auf dem Grenzwert der Turbineneintrittstemperatur bei hohen Eintrittstemperaturen, und
Steuern der Flüssigbrennstoffzufuhr zu dem Brenner basierend auf dem Grenzwert der Wellendrehzahl bei niedrigen Eintrittstemperaturen.

10. Verfahren zum Betreiben eines Turbinenmotors (10) nach einem der Ansprüche 1 bis 9, wobei die wenigstens zwei austauschbaren Flüssigbrennstoffbrenner (48, 49) Bereiche der Betriebsleistungsabgabe aufweisen, welche sich überlappen.

11. Verfahren zum Betreiben eines Turbinenmotors (10) nach einem der Ansprüche 1 bis 10, wobei die wenigstens zwei austauschbaren Flüssigbrennstoffbrenner (48, 49) Flüssigbrennstoff-Hauptbrenner (48) sind.

12. Verfahren zum Betreiben eines Turbinenmotors (10) nach einem der Ansprüche 1 bis 11, wobei die wenigstens zwei austauschbaren Flüssigbrennstoffbrenner (48, 49) Flüssigbrennstoff-Pilotbrenner (49) sind.

13. Verfahren zum Betreiben eines Turbinenmotors (10) nach Anspruch 11, wobei ein beliebiger der Flüssigbrennstoff-Hauptbrenner (48) eine Leistungsabgabe innerhalb eines beliebigen der Bereiche 10 % bis 25 %, 20 % bis 80 % und 70 % bis 100 % aufweist.

14. Verfahren zum Betreiben eines Turbinenmotors (10) nach einem der Ansprüche 2 bis 5, wobei beliebige zwei der Brenner (48, 49) eine Leistungsabgabe innerhalb der Bereiche 10 % bis 25 %, 20 % bis 80 % und 70 % bis 100 % aufweisen.

15. Verfahren zum Betreiben eines Turbinenmotors (10) nach einem der Ansprüche 2 bis 5, wobei beliebige zwei der Brenner (48, 49) eine Leistungsabgabe innerhalb der Bereiche 10 % bis 25 % und 75 % bis 100 % aufweisen.

## Revendications

1. Procédé d'exploitation d'un moteur (10) à turbine, le moteur (10) à turbine comprenant une admission (12), une turbine (28, 30), un système de commande (51), un système (53) d'amenée de combustible liquide et un système modulaire (45) de brûleurs de combustible liquide comportant au moins deux brûleurs liquides interchangeables (48, 49) et un collecteur (54) de combustible liquide ;
le système de commande (51) régulant une amenée de combustible via le collecteur (54) de combustible liquide jusqu'aux brûleurs (48, 49) en fonction de la puissance de sortie demandée ;
les au moins deux brûleurs interchangeables (48, 49) de combustible liquide ayant des gammes différentes de puissance opérationnelle de sortie et consistant au moins en un brûleur de combustible liquide à puissance de sortie élevée et en un brûleur de combustible liquide à faible puissance de sortie,
**caractérisé en ce que** le procédé d'exploitation du moteur (10) à turbine comprend les étapes consistant :
à réguler une amenée de combustible liquide jusqu'au brûleur (48, 49) à puissance de sortie élevée en vue de sortir une puissance élevée sur la base d'une limite de température d'entrée en turbine ;
à réguler une amenée de combustible liquide jusqu'au brûleur (48, 49) à faible puissance de sortie en vue de sortir une faible puissance sur la base d'une limite de pression dans le collecteur de combustible liquide.

2. Procédé d'exploitation d'un moteur (10) à turbine selon la revendication 1, étant entendu que le procédé comprend l'étape consistant :
à interchanger le brûleur (48, 49) de combustible liquide à puissance de sortie élevée et le brûleur (48, 49) à faible sortie de puissance pour obtenir une gamme prédéterminée de puissances de sortie.

3. Procédé d'exploitation d'un moteur (10) à turbine selon la revendication 2, étant entendu que le procédé comprend l'étape consistant :
à entrer dans le système de commande (51) le fait que le brûleur (48, 49) de combustible liquide à puissance de sortie élevée et le brûleur (48, 49) à faible puissance de sortie ont été interchangés.

4. Procédé d'exploitation d'un moteur (10) à turbine selon l'une quelconque des revendications 2-3, étant entendu que l'étape de procédé consistant à interchanger le brûleur (48, 49) de combustible liquide à puissance de sortie élevée et le brûleur (48, 49) à faible puissance de sortie comprend l'étape consistant :
à modifier la limite de température d'entrée en turbine en fonction de ce que la pression dans le collecteur donne une limite abaissée pour la sortie maximale admissible.

5. Procédé d'exploitation d'un moteur (10) à turbine selon la revendication 4, étant entendu que le procédé comprend l'étape consistant :
à réduire la limite modifiée de la TET lorsque la pression est élevée dans le collecteur de combustible liquide.

6. Procédé d'exploitation d'un moteur (10) à turbine selon l'une quelconque des revendications 4-5, étant entendu que le procédé comprend l'étape consistant :
à augmenter la limite modifiée de la TET lorsque la pression est basse dans le collecteur de combustible liquide.

7. Procédé d'exploitation d'un moteur (10) à turbine selon l'une quelconque des revendications 1-6, étant entendu que le moteur à turbine est relié à un entraînement mécanique ou à un générateur électrique relié à un réseau de distribution d'électricité,
le procédé comprenant l'étape consistant en ce que le système de commande (51) émet l'un quelconque ou plusieurs des avertissements :
le moteur à turbine approche de la limite de température d'entrée en turbine où aucune nouvelle charge ne peut être demandée, et
le moteur à turbine tourne à la limite de température d'entrée en turbine.

8. Procédé d'exploitation d'un moteur (10) à turbine selon l'une quelconque des revendications 1-6, étant entendu que le moteur à turbine fonctionne en mode d'îlotage,
le procédé comprenant l'étape consistant en ce que le système de commande (51) émet l'un quelconque ou plusieurs des avertissements :
le moteur à turbine approche de la limite de température d'entrée en turbine où aucune nouvelle charge ne peut être demandée ;
le moteur à turbine a dépassé la limite de température d'entrée en turbine et la puissance demandée doit être réduite, et
le moteur à turbine tourne à la limite de température d'entrée en turbine.

9. Procédé d'exploitation d'un moteur (10) à turbine selon l'une quelconque des revendications 1-8, étant entendu que le procédé comprend les étapes consistant :
à réguler l'amenée de combustible liquide jusqu'au brûleur sur la base de la limite de température d'entrée en turbine à des températures d'admission élevées, et
à réguler l'amenée de combustible liquide jusqu'au brûleur sur la base de la limite de vitesse d'arbre à des températures d'admission basses.

10. Procédé d'exploitation d'un moteur (10) à turbine selon l'une quelconque des revendications 1-9, étant entendu que les au moins deux brûleurs interchangeables (48, 49) de combustible liquide possèdent des gammes de puissance opérationnelle de sortie qui se recouvrent.

11. Procédé d'exploitation d'un moteur (10) à turbine selon l'une quelconque des revendications 1-10, étant entendu que les au moins deux brûleurs interchangeables (48, 49) de combustible liquide sont des brûleurs liquides principaux (48) .

12. Procédé d'exploitation d'un moteur (10) à turbine selon l'une quelconque des revendications 1-11, étant entendu que les au moins deux brûleurs interchangeables (48, 49) de combustible liquide sont des brûleurs liquides pilotes (49).

13. Procédé d'exploitation d'un moteur (10) à turbine selon la revendication 11, étant entendu que l'un quelconque des brûleurs liquides principaux (48) a une puissance de sortie se situant dans l'une quelconque des gammes allant de 10 % à 25 %, de 20 % à 80 % et de 70 % à 100 %.

14. Procédé d'exploitation d'un moteur (10) à turbine selon l'une quelconque des revendications 2-5, étant entendu que deux quelconques des brûleurs (48, 49) ont une puissance de sortie se situant dans les gammes allant de 10 % à 25 %, de 20 % à 80 % et de 70 % à 100 %.

15. Procédé d'exploitation d'un moteur (10) à turbine selon l'une quelconque des revendications 2-5, étant entendu que deux quelconques des brûleurs (48, 49) ont une puissance de sortie se situant dans les gammes allant de 10 % à 25 % et de 75 % à 100 %.
